# FASCICULE DE BREVET EUROPEEN

(11) **EP 3 395 517 B1**
(45) Date de publication et mention de la délivrance du brevet: **24.07.2019**
(21) Numéro de dépôt: 18168638.7
(22) Date de dépôt: 22.04.2018
(51) Int. Cl.: B26F 1/00, B26F 1/24

(54) **DISPOSITIF DE PERFORATION D'UN PANNEAU ANNULAIRE ACOUSTIQUE POUR UNE TURBOMACHINE**
VORRICHTUNG ZUM PERFORIEREN EINER RINGFÖRMIGEN SCHALTTAFEL FÜR EINE TURBOMASCHINE
DEVICE FOR PERFORATING AN ACOUSTIC ANNULAR PANEL FOR A TURBINE ENGINE

(30) Priorité: 27.04.2017 FR 1753695
(43) Date de publication de la demande: 31.10.2018
(73) Titulaire: SAFRAN AIRCRAFT ENGINES, 75015 Paris (FR)
(72) Inventeur: JODET, Norman, Bruno, André, 77550 MOISSY-CRAMAYEL (FR); BAUDOIN, Laurent, Louis, Robert, 77550 MOISSY-CRAMAYEL (FR); GONZALEZ, Jéremy, Paul, Francisco, 77550 MOISSY-CRAMAYEL (FR)
(74) Mandataire: Gevers & Orès

(56) Documents cités:
- EP-A1- 1 683 615
- JP-A- 2004 174 706
- US-A- 4 254 075

## Description

### DOMAINE TECHNIQUE

La présente invention concerne un dispositif de perforation d'un panneau annulaire acoustique pour une turbomachine. Est également concerné un procédé de perforation d'un panneau annulaire acoustique pour une turbomachine.

### ETAT DE L'ART

L'état de l'art comprend notamment les documents US-A-4,254,075, JP-A-2004/174706A et EP-A1-1 683 615.

Généralement, un panneau acoustique de turbomachine comprend une structure en couches ou sandwich comportant deux peaux, respectivement interne ou inférieure, et externe ou supérieure, entre lesquelles s'étend une structure alvéolaire par exemple en nid d'abeilles. Les alvéoles de la structure s'étendent dans des directions parallèles et sensiblement perpendiculaires aux peaux, qui ferment ces alvéoles à deux extrémités opposées. L'une des peaux est en général pleine, c'est-à-dire non poreuse, de façon à avoir des propriétés réfléchissantes aux bruits, et l'autre des peaux, située en général du côté du bruit à atténuer, est poreuse ou perforée de façon à assurer la transmission et la dissipation des ondes acoustiques. Il est connu que les propriétés de traitement acoustique d'un tel panneau dépendent notamment de l'épaisseur et du niveau de porosité de sa peau perforée.

Ce type de panneau peut être par exemple utilisé pour tapisser la surface intérieure d'un carter entourant une soufflante de turbomachine, de façon à ce que les bruits émis par la soufflante en fonctionnement soient au moins en partie absorbés par le panneau, ce qui limite les nuisances sonores pour les passagers de l'aéronef équipé de cette turbomachine.

Les peaux du panneau sont en généralement constituées de fibres de carbone pré-imprégnées d'une résine polymérisable. La structure alvéolaire est pressée contre les peaux au moment de la cuisson pour obtenir un ensemble solidaire rigide et résistant.

L'une des peaux peut être rendue poreuse de plusieurs manières :
- après le durcissement de la résine, on utilise un système de perçage « mécanique » basé par exemple sur l'action abrasive de forets rotatifs,
- pendant le durcissement de la résine, des aiguilles sont positionnées à travers le treillis en fibres de carbone, avant la cuisson de la résine. De cette manière, on écarte les fibres de carbone de façon à occuper l'espace souhaité. En retirant les aiguilles après durcissement de la résine, on obtient des micro-perforations qui donnent la caractéristique de porosité souhaitée à la peau.

La deuxième méthode de micro-perforation est largement privilégiée pour des raisons de coût et de cadence opérationnelle. Elle est actuellement mise en oeuvre pour la confection de panneaux acoustiques de turbomachine.

Cependant, cette méthode présente des limitations :
- la méthode n'est actuellement applicable que pour des secteurs ou segments de panneau, qui ont une étendue angulaire inférieure à 90°. Il n'est en effet pas possible d'appliquer actuellement cette méthode pour perforer un panneau annulaire s'étendant en continu sur 360°.
- pour un segment de panneau de 60°, la variation d'angle des perçages sera de +/-30°, ce qui pénalise l'efficacité du panneau. Plus la section angulaire couverte par un seul panneau est importante, plus la qualité de la micro-perforation sera dégradée, à cause des hétérogénéités liées aux écarts angulaires lors de l'introduction de chaque aiguille dans le treillis en fibre de carbone. L'efficacité acoustique du panneau s'en trouve alors dégradée, car le dimensionnement des perforations est un paramètre de premier ordre pour garantir cette efficacité.

La présente invention propose une solution à ce problème, qui est simple, efficace et économique.

### EXPOSE DE L'INVENTION

L'invention propose un dispositif de perforation d'un panneau annulaire acoustique pour une turbomachine, caractérisé en ce qu'il comprend :
- un anneau de support d'aiguilles de perforation, ledit anneau ayant un axe A de révolution et étant destiné à être engagé sensiblement coaxialement à l'intérieur dudit panneau, ledit anneau étant sectorisé et comportant des secteurs d'anneau régulièrement répartis autour dudit axe et chacun mobiles radialement vis-à-vis de l'axe depuis une position de repos radialement interne jusqu'à une position de perforation du panneau radialement externe, et
- au moins un actionneur rotatif d'axe A de rotation et relié mécaniquement auxdits secteurs d'anneau de façon à ce qu'une rotation de l'actionneur entraîne un déplacement radial des secteurs d'anneau.

L'invention permet ainsi de perforer un panneau annulaire, ce qui n'était pas possible avec la technique antérieure. Ceci est rendu possible par l'utilisation d'un anneau sectorisé de support d'aiguilles de perforation et par les déplacements radiaux des secteurs d'anneau depuis une position de repos interne jusqu'à une position de perforation du panneau radialement externe.

Le dispositif selon l'invention peut comprendre une ou plusieurs des caractéristiques suivantes, prises isolément les unes des autres ou en combinaison les unes avec les autres :
- l'actionneur est relié auxdits secteurs par des moyens de liaison configurés pour que chaque secteur d'anneau soit déplacé radialement de manière désynchronisée par rapport aux secteurs d'anneau adjacents ;
- les moyens de liaison sont configurés pour que chaque secteur d'anneau soit déplacé radialement à une vitesse différente de celles des secteurs d'anneau adjacents ;
- les moyens de liaison comprennent des systèmes bielle-manivelle et/ou des glissières ;
- les secteurs d'anneau portent sur des surfaces radialement externes les aiguilles de perforation ;
- le dispositif comprend en outre un support annulaire dudit panneau, ledit support étant destiné à être entouré par le panneau ;
- ledit support annulaire comprend des orifices sensiblement radiaux de passage et guidage desdites aiguilles ;
- le nombre de secteurs d'anneau est pair et est supérieur ou égal à quatre.

La présente invention concerne également un procédé de perforation d'un panneau annulaire acoustique pour une turbomachine, par l'utilisation d'un dispositif tel que décrit ci-dessus, caractérisé en ce qu'il comprend les étapes consistant à :
- disposer le panneau annulaire à perforer autour dudit support,
- engager les secteurs d'anneau à l'intérieur dudit panneau,
- mettre en rotation l'actionneur de façon à déplacer les secteurs d'anneau depuis leur position de repos jusqu'à leur position de perforation, les aiguilles étant guidés dans les orifices du support avant leur traversée du panneau.

Avantageusement, les secteurs d'anneau comprennent une première série de secteurs régulièrement répartis autour de l'axe A et une seconde série de secteurs régulièrement répartis autour de l'axe A et intercalés entre les secteurs de la première série. Les secteurs de la première série sont déplacés à une vitesse différente de celle des secteurs de la seconde série.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue schématique d'un exemple de réalisation d'un panneau acoustique, en particulier de turbomachine,
- la figure 2 est une vue très schématique d'un exemple de réalisation d'un dispositif selon l'invention de perforation d'un panneau annulaire acoustique, et
- la figure 3 est une vue très schématique à plus grande échelle d'une partie de l'exemple de réalisation du dispositif de la figure 2.

### DESCRIPTION DETAILLEE

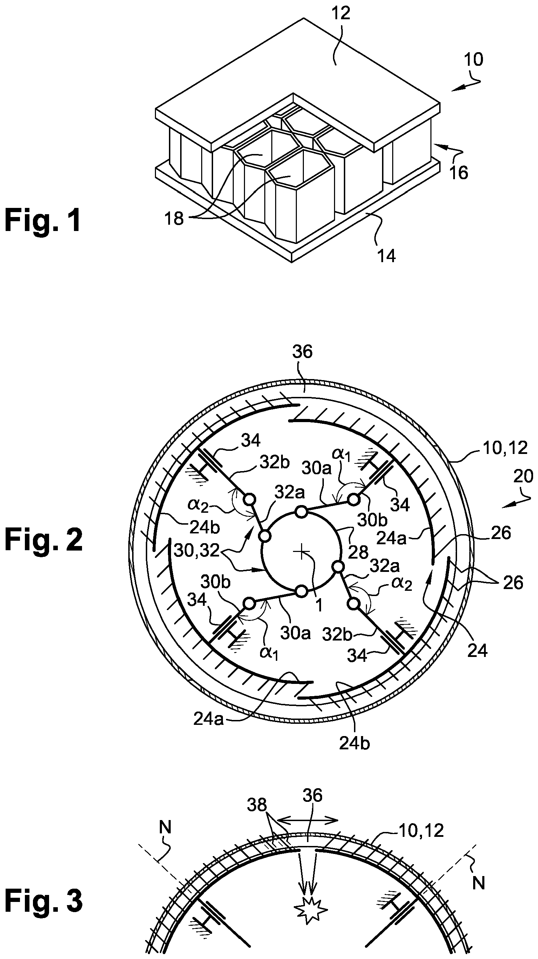

La figure 1 représente un panneau acoustique 10 qui peut par exemple être utilisé pour le traitement acoustique dans une turbomachine. Dans ce cas, il est utilisé pour tapisser une surface interne d'un carter par exemple.

Un panneau acoustique 10 comprend une structure en couches comportant deux peaux, respectivement interne 12 et externe 14, entre lesquelles s'étend une structure alvéolaire 16 qui est du type en nid d'abeilles dans l'exemple représenté. Les alvéoles 18 de la structure 16 s'étendent dans des directions parallèles et sensiblement perpendiculaires aux peaux 12, 14, qui ferment ces alvéoles aux extrémités interne et externe.

La peau externe 14 est pleine et réfléchissante aux bruits, et la peau interne 12 est perforée de façon à assurer la transmission et la dissipation des ondes acoustiques.

Les figures 2 et 3 représentent un exemple de réalisation d'un dispositif 20 selon l'invention pour la perforation d'un panneau annulaire 10 ou d'une paroi interne 12, s'étendant donc en continu sur 360° autour de son axe de révolution A.

Dans l'exemple représenté, le dispositif 20 comprend :
- un anneau 24 sectorisé de support d'aiguilles de perforation 26,
- un actionneur rotatif 28 d'axe A de rotation, et
- des moyens 30, 32 de liaison mécanique de l'actionneur 28 à l'anneau 24.

L'anneau 24 comprend des secteurs 24a, 24b disposés circonférentiellement bout à bout. Le nombre de secteurs 24a, 24b est de préférence pair et supérieur ou égal à quatre. Dans l'exemple représenté, ce nombre est de quatre et chaque secteur a une étendue angulaire de 90° environ.

Chaque secteur comprend une surface cylindrique interne et une surface cylindrique externe, cette dernière portant les aiguilles 26 qui s'étendent radialement vers l'extérieur par rapport à l'axe A. La densité, la forme en section et les dimensions des aiguilles 26 sont déterminées en fonction des caractéristiques de porosité souhaitées pour la peau interne du panneau 10.

Pour faciliter l'insertion et le retrait des aiguilles du panneau 10, il est préférable que les aiguilles d'un même secteur d'anneau 24a, 24b soient parallèles et par exemple également parallèles à une normale N à leur surface externe située à mi-distance des extrémités circonférentielles du secteur (cf. figure 2). Ainsi, comme on peut le voir à la figure 3, les aiguilles d'un secteur d'anneau 24a, 24b ne risquent pas de venir au contact des aiguilles des secteurs adjacents lors de l'actionnement du dispositif 20. Les aiguilles situées à l'extrémité circonférentielle d'un secteur d'anneau 24a, 24b sont ainsi inclinées par rapport à celles situées à l'extrémité circonférentielle en regard d'un secteur d'anneau 24a, 24b adjacent (cf. figure 3), si bien qu'une partie circonférentielle du panneau pourrait ne pas être perforée dans les zones inter-secteurs. La dimension circonférentielle de cette partie peut par exemple être réduite en augmentant le nombre de secteurs composant l'anneau. L'augmentation du nombre de secteurs permet en outre de réduire l'angle d'inclinaison des aiguilles au niveau des extrémités circonférentielles précitées de deux secteurs adjacents.

L'actionneur 28 a une forme générale cylindrique et est disposé radialement à l'intérieur des secteurs d'anneau 24a, 24b en étant aligné sur l'axe A. Il est entraîné en rotation par des moyens de commande appropriés, dans un sens ou dans l'autre autour de l'axe A. L'actionneur peut par exemple comprendre un alésage interne cannelé engrené avec un arbre cannelé d'un moteur.

Les moyens de liaison 30, 32 comprennent ici des systèmes bielle-manivelle. Chaque secteur d'anneau 24a, 24b est ici relié à l'actionneur par un système bielle-manivelle, comportant une bielle 30a ou 32a et une manivelle 30b ou 32b. La bielle 30a ou 32a a une extrémité radialement interne reliée par une liaison pivot à l'actionneur 28, et une extrémité radialement externe reliée par une liaison pivot à une extrémité radialement interne de la manivelle 30b ou 32b. L'extrémité radialement externe de la manivelle 30b, 32b est reliée à la surface cylindrique interne d'un secteur d'anneau 24a, 24b Les liaisons pivot ont ici des axes d'articulation parallèles entre eux et à l'axe A. Les manivelles 30b, 32b sont guidées en translation radiale dans des glissières 34 fixes.

Chaque secteur d'anneau 24a, 24b est déplaçable radialement depuis une position de repos radialement interne jusqu'à une position de perforation du panneau radialement externe. On comprend dès lors que les aiguilles 26 des secteurs d'anneau ne traversent pas le panneau 10 dans la position de repos, et traversent le panneau dans la position de perforation.

Le déplacement radial des secteurs d'anneau est provoqué par la mise en rotation dans un sens de l'actionneur, les systèmes bielle-manivelle transformant la rotation de l'anneau en une translation radiale des secteurs. Dans la position de repos, les systèmes bielle-manivelle forment chacun un angle α1 et, dans la position de perforation, ils forment chacun un angle α2 qui est supérieur à α1. Les angles α1 et α2 d'un système peuvent être différents de ceux des systèmes adjacents.

Les systèmes bielle-manivelle sont de préférence configurés de façon à ce que chaque secteur d'anneau 24a, 24b soit déplacé radialement de manière désynchronisée par rapport aux secteurs d'anneau adjacents. Plus particulièrement, dans l'exemple représenté, chaque secteur d'anneau 24a, 24b est déplacé radialement à une vitesse différente de celles des secteurs d'anneau adjacents. Les secteurs d'anneau sont agencés en deux séries, une première série de deux secteurs diamétralement opposés et une seconde série de deux secteurs diamétralement opposés et intercalés entre les secteurs de la première série.

Les secteurs 24 de la première série sont chacun reliés par la bielle 30a et la manivelle 30b à l'actionneur et les secteurs 24b de la seconde série sont chacun reliés par la bielle 32a et la manivelle 32b à l'actionneur. Les bielles 30a ont une longueur différente (et ici supérieure) à celle des bielles 32a, et les manivelles 30b ont une longueur différente (et ici inférieure) à celle des manivelles 32b. Ceci permet aux secteurs 24a de la première série d'être déplacé radialement à une vitesse différente (et ici supérieure) à celle des secteurs 24b de la seconde série.

On comprend ainsi que, après la mise en rotation de l'actionneur 28, un secteur d'anneau 24a, 24b va être entrainé à une vitesse différente de celle des secteurs d'anneau adjacents, ce qui évitera aux bords circonférentiels des secteurs de venir au contact les uns des autres, comme cela est schématiquement représenté à la figure 3.

Pour faciliter le maintien du panneau 10 et le guidage des aiguilles lors de la translation des secteurs d'anneau, le dispositif comprend en outre un support annulaire 36 du panneau 10, qui s'étend radialement à l'intérieur du panneau, pour le supporter. Le support 36 peut servir de bâti pour le dispositif 20, et porter par exemple les glissières 34 précitées.

Le panneau 10 s'étend donc autour du support 36, sa peau externe étant destinée à reposer directement sur une surface cylindrique interne du support 36. Avantageusement, le support 36 comprend des orifices sensiblement radiaux 38 de passage et guidage des aiguilles (cf. figure 3).

La perforation du panneau 10, et en particulier de sa peau interne 12, peut être réalisée de la façon suivante. Le panneau 10 est tout d'abord disposer sur le support 36. Le panneau avec le treillis de fibres pré-imprégnés est donc positionné en appui sur le support. Le support peut servir de « moule » pour la fabrication du panneau ou du moins pour qu'il conserve sa forme annulaire, en particulier lorsque l'opération de perforation est réalisée avant l'étape de cuisson précitée. Les secteurs d'anneau sont ensuite engagés à l'intérieur du support et du panneau, les secteurs étant dans leur position de repos radialement interne. L'actionneur est mis en rotation (dans le sens horaire dans l'exemple représenté) de façon à déplacer les secteurs d'anneau depuis leur position de repos jusqu'à leur position de perforation. Grâce aux dimensionnements différents des moyens de liaison 30, 32, on produit un effet d'alternance permettant d'éviter les collisions entre les secteurs. On peut par exemple considérer que l'écart de longueur entre les bielles 30a et 32a doit être supérieur à 10% pour obtenir un système d'alternance efficace. Une alternative à ce système consisterait à utiliser deux actionneurs indépendants pour obtenir le mouvement d'alternance. Le dimensionnement du système bielle-manivelle pourrait ainsi être unique.

Les aiguilles traversent les orifices de guidage 38 du support 36, puis le treillis de fibres pré-imprégnées. Le dispositif 20 est alors verrouillé dans cette position. Le panneau 10 peut être mis en cuisson selon une pratique connue de l'état de la technique (contenu dans un système fermé, mis sous pression et sous haute température). Avant la fin de la cuisson, le dispositif 20 est déverrouillé et l'actionneur 28 est mis en mouvement, dans le sens inverse (antihoraire) de façon à retirer les aiguilles du treillis de fibres pré-imprégnées. Après la cuisson, le panneau est près et présente les micro-perforations telles que souhaitées. Dans le cas où la peau interne 12 seule serait disposée sur le support 36 et perforée, elle est après cuisson rapportée et fixée, par exemple par collage, sur un ensemble comportant la peau externe 14 et la structure 16.

## Revendications

1. Dispositif (20) de perforation d'un panneau annulaire acoustique (10) pour une turbomachine, **caractérisé en ce qu'**il comprend :
- un anneau (24) de support d'aiguilles de perforation (26), ledit anneau ayant un axe A de révolution et étant destiné à être engagé sensiblement coaxialement à l'intérieur dudit panneau, ledit anneau étant sectorisé et comportant des secteurs d'anneau (24a, 24b) régulièrement répartis autour dudit axe et chacun mobiles radialement vis-à-vis de l'axe depuis une position de repos radialement interne jusqu'à une position de perforation du panneau radialement externe, et
- au moins un actionneur rotatif (28) d'axe A de rotation et relié mécaniquement auxdits secteurs d'anneau de façon à ce qu'une rotation de l'actionneur entraîne un déplacement radial des secteurs d'anneau.

2. Dispositif (20) selon la revendication précédente, dans lequel l'actionneur (28) est relié auxdits secteurs par des moyens de liaison configurés pour que chaque secteur d'anneau (24a, 24b) soit déplacé radialement de manière désynchronisée par rapport aux secteurs d'anneau adjacents.

3. Dispositif (20) selon la revendication précédente, dans lequel les moyens de liaison sont configurés pour que chaque secteur d'anneau (24a, 24b) soit déplacé radialement à une vitesse différente de celles des secteurs d'anneau adjacents.

4. Dispositif (20) selon la revendication 2 ou 3, dans lequel les moyens de liaison comprennent des systèmes bielle-manivelle (30, 32) et/ou des glissières (34).

5. Dispositif (20) selon l'une des revendications précédentes, dans lequel les secteurs d'anneau (24a, 24b) portent sur des surfaces radialement externes les aiguilles de perforation (26).

6. Dispositif (20) selon l'une des revendications précédentes, comprenant en outre un support annulaire (36) dudit panneau (10), ledit support étant destiné à être entouré par le panneau.

7. Dispositif (20) selon les revendications 5 et 6, prises ensemble, dans lequel ledit support annulaire (36) comprend des orifices (38) sensiblement radiaux de passage et guidage desdites aiguilles (26).

8. Dispositif (20) selon l'une des revendications précédentes, dans lequel le nombre de secteurs d'anneau (24a, 24b) est pair et est supérieur ou égal à quatre.

9. Procédé de perforation d'un panneau annulaire acoustique (10) pour une turbomachine, par l'utilisation d'un dispositif (20) selon la revendication 7, **caractérisé en ce qu'**il comprend les étapes consistant à :
- disposer le panneau annulaire (10) à perforer autour dudit support (36),
- engager les secteurs d'anneau (24a, 24b) à l'intérieur dudit panneau,
- mettre en rotation l'actionneur (28) de façon à déplacer les secteurs d'anneau depuis leur position de repos jusqu'à leur position de perforation, les aiguilles (26) étant guidés dans les orifices (38) du support avant leur traversée du panneau.

10. Procédé selon la revendication précédente, dans lequel, les secteurs d'anneau (24a, 24b) comprenant une première série de secteurs (24a) régulièrement répartis autour de l'axe A et une seconde série de secteurs (24b) régulièrement répartis autour de l'axe A et intercalés entre les secteurs de la première série, les secteurs de la première série étant déplacés à une vitesse différente de celle des secteurs de la seconde série.

## Patentansprüche

1. Vorrichtung (20) zur Perforation einer ringförmigen akustischen Platte (10) für eine Turbomaschine, **dadurch gekennzeichnet, dass** sie umfasst:
- einen Ring (24) zum Stützen von Perforationsnadeln (26), wobei der Ring eine Rotationsachse (A) aufweist und dazu bestimmt ist, um im Wesentlichen koaxial ins Innere der Platte eingeführt zu werden, wobei der Ring in Sektoren aufgeteilt ist und Ringsektoren (24a, 24b) beinhaltet, die regelmäßig um die Achse verteilt sind und jeder radial gegenüber der Achse aus einer radial inneren Ruheposition bis zu einer radial äußeren Perforationsposition der Platte beweglich ist, und
- mindestens einen drehbaren Aktuator (28) einer Drehachse A und mechanisch derart mit den Ringsektoren verbunden, dass eine Drehung des Aktuators zu einer radialen Verschiebung der Ringsektoren führt.

2. Vorrichtung (20) nach dem vorstehenden Anspruch, wobei der Aktuator (28) durch Verbindungsmittel mit den Sektoren verbunden ist, die konfiguriert sind, damit jeder Ringsektor (24a, 24b) im Verhältnis zu den benachbarten Ringsektoren phasenverschoben radial verschoben wird.

3. Vorrichtung (20) nach dem vorstehenden Anspruch, wobei die Verbindungsmittel konfiguriert sind, damit jeder Ringsektor (24a, 24b) mit einer Geschwindigkeit radial verschoben wird, die sich von jenen der benachbarten Ringsektoren unterscheidet.

4. Vorrichtung (20) nach Anspruch 2 oder 3, wobei die Verbindungsmittel Pleuel-Kurbel Systeme (30, 32) und/ oder Gleitschienen (34) umfassen.

5. Vorrichtung (20) nach einem der vorstehenden Ansprüche, wobei die Ringsektoren (24a, 24b) auf radial äußeren Oberflächen die Perforationsnadeln (26) tragen.

6. Vorrichtung (20) nach einem der vorstehenden Ansprüche, weiter eine ringförmige Stütze (36) der Platte (10) umfassend, wobei die Stütze dazu bestimmt ist, von der Platte umgeben zu werden.

7. Vorrichtung (20) nach den Ansprüchen 5 und 6, zusammengenommen, wobei die ringförmige Stütze (36) im Wesentlichen radiale Öffnungen (38) zum Durchgehen und Leiten der Nadeln (26) umfasst.

8. Vorrichtung (20) nach einem der vorstehenden Ansprüche, wobei die Zahl der Ringsektoren (24a, 24b) gerade ist und größer oder gleich vier ist.

9. Verfahren zur Perforation einer ringförmigen akustischen Platte (10) für eine Turbomaschine durch die Verwendung einer Vorrichtung (20) nach Anspruch 7, **dadurch gekennzeichnet, dass** es die Schritte umfasst, bestehend aus:
- Anbringen der zu perforierenden ringförmigen Platte (10) um die Stütze (36),
- Einführen der Ringsektoren (24a, 24b) ins Innere der Platte,
- in Drehung versetzen des Aktuators (28), um die Ringsektoren aus ihrer Ruheposition bis zu ihrer Perforationsposition zu verschieben, wobei die Nadeln (26) vor deren Querung der Platte in die Öffnungen (38) der Stütze geleitet werden.

10. Verfahren nach dem vorstehenden Anspruch, wobei die Ringsektoren (24a, 24b) eine erste Reihe von Sektoren (24a) regelmäßig um die Achse A verteilt, und eine zweite Reihe von Sektoren (24b) regelmäßig um die Achse A verteilt und zwischen den Sektoren der ersten Reihe eingelegt, umfassen, wobei die Sektoren der ersten Reihe mit einer Geschwindigkeit verschoben werden, die sich von jener der Sektoren der zweiten Reihe unterscheidet.

## Claims

1. Device (20) for perforating an acoustic annular panel (10) for a turbine engine, **characterised in that** it comprises:
- a ring (24) support of perforation needle (26), said ring having an axis A of revolution and being intended to be inserted substantially coaxially inside said panel, said ring being sectored and comprising ring sectors (24a, 24b) regularly distributed around said axis and each one radially mobile opposite to the axis from a rest position radially inner up to a perforation position of the panel radially outer, and
- at least one rotating actuator (28) of rotation axis A and mechanically connected to said ring sectors such that a rotation of the actuator leads to a radial movement of the ring sectors.

2. Device (20) according to the preceding claim, wherein the actuator (28) is connected to said sectors by connecting means, configured such that each ring sector (24a, 24b) is moved radially in a non-synchronised way in relation to the adjacent ring sectors.

3. Device (20) according to the preceding claim, wherein the connecting means are configured such that each ring sector (24a, 24b) is moved radially at different speed to those of the adjacent ring sectors.

4. Device (20) according to claim 2 or 3, wherein the connecting means comprise a crank and connecting rod systems (30, 32) and/or slider (34).

5. Device (20) according to one of the preceding claims, wherein the ring sectors (24a, 24b) support the perforation needles (26) on the radially outer surfaces.

6. Device (20) according to one of the preceding claims, further comprising an annular support (36) of said panel (10), said support being intended to be surrounded by the panel.

7. Device (20) according to claims 5 and 6, wherein said annular support (36) comprises substantially radial orifices (38) for the passage and guiding of said needles (26).

8. Device (20) according to one of the preceding claims, wherein the number of ring sectors (24a, 24b) is even and is higher than or equal to four.

9. Method for perforating an acoustic annular panel (10) for a turbine engine, by using a device (20) according to claim 7, **characterised in that** it comprises steps consisting in:
- arranging the annular panel (10) to be perforated around said support (36),
- inserting the ring sectors (24a, 24b) inside said panel,
- rotating the actuator (28) so as to move the ring sectors from their rest position up to their perforation position, the needles (26) being guided in the support orifices (38) before their passage from the panel.

10. Method according to the preceding claim, wherein, the ring sectors (24a, 24b) comprise a first series of sectors (24a) regularly distributed around the axis A and a second series of sectors (24b) regularly distributed around the axis A and interleaved between the sectors of the first series, the sectors of the first series being moved at a different speed to those of the sectors of the second series.
